# EUROPÄISCHE PATENTSCHRIFT

(11) **EP 1 375 262 B1**
(45) Veröffentlichungstag und Bekanntmachung des Hinweises auf die Patenterteilung: **10.08.2005**
(21) Anmeldenummer: 03012199.0
(22) Anmeldetag: 05.06.2003
(51) Int. Cl.: B60R 21/16

(54) **Gassack**
Airbag
Airbag

(30) Priorität: 21.06.2002 DE 20209659 U
(43) Veröffentlichungstag der Anmeldung: 02.01.2004
(73) Patentinhaber: TRW Automotive Safety Systems GmbH, 63743 Aschaffenburg (DE)
(72) Erfinder: Bohn, Stefan, 63773 Goldbach (DE); Fellhauer, Joachim, 63741 Nilkheim (DE)
(74) Vertreter: Kitzhofer, Thomas, Dipl.-Ing.

(56) Entgegenhaltungen:
- EP-A- 0 700 809
- WO-A-03/006276

## Beschreibung

Die Erfindung betrifft einen Gassack für ein Fahrzeuginsassen-Rückhaltesystem, mit einem Mantel, der eine Durchtrittsöffnung aufweist, und einem Innensack mit einer Einströmöffnung und wenigstens einer Entlüftungsöffnung, wobei der Rand der Einströmöffnung des Innensacks mit dem Rand der Durchtrittsöffnung verbunden ist.

Viele der heutzutage eingesetzten Gassäcke sind mit Entlüftungsöffnungen versehen, die in gewissen Situationen freigegeben werden, um ein kontrolliertes Abströmen des Gases aus dem Inneren des Gassacks zu ermöglichen. Es gibt vielfältige Lösungen für die Freigabe derartiger Entlüftungsöffnungen.

In der gattungsbildenden EP-A-0 700 809 ist z.B. ein Gassack beschrieben, bei dem der Abschnitt des Gassacks, der die Entlüftungsöffnungen aufweist, im gefalteten Zustand des Gassacks in den Rest des Gassacks eingestülpt ist und wobei die Einstülpung über eine Reißnaht verschlossen ist. Hierdurch ist gewährleistet, daß der die Entlüftungsöffnungen aufweisende Abschnitt des Gassacks sich erst dann aus dem Gassack entfalten kann, wenn ein gewisser Innendruck überschritten wird, durch den eine genügend hohe Kraft aufgebracht wird, um die Reißnaht zu zerstören. Es ist jedoch fertigungstechnisch aufwendig, eine Reißnaht mit einer genau definierten Öffnungskraft bereitzustellen.

Die Erfindung schafft einen Gassack, bei dem es auf einfache Art und Weise möglich ist, die zur Freigabe der Entlüftungsöffnung benötigte Kraft festzulegen. Dies wird dadurch erreicht, daß der Gassack, dessen Mantel eine Durchtrittsöffnung aufweist und dessen Innensack eine Einströmöffnung und wenigstens eine Entlüftungsöffnung hat, wobei der Rand der Einströmöffnung des Innensacks mit dem Rand der Durchtrittsöffnung verbunden ist, im Bereich der Verbindung von Mantel und Innensack eine Einschnürung für den Innensack aufweist, und daß der Innensack in einem zusammengelegten Zustand des Gassacks in das Innere des Mantels eingestülpt ist und während eines Aufblasens des Gassacks durch die Durchtrittsöffnung aus dem Mantel austreten kann. Die Kraft, die benötigt wird, um den Innensack und damit die Entlüftungsöffnung freizugeben, hängt von der Querschnittsfläche der Durchtrittsöffnung und dem Volumen des Gassackmaterials für den Innensack ab. Dies sind relativ einfach zu bestimmende und leicht exakt reproduzierbare Parameter. Auf eine Reißnaht kann beim erfindungsgemäßen Gassack vollständig verzichtet werden.

Bevorzugt ist die Entlüftungsöffnung so angeordnet, daß während des Aufblasens vor dem Austreten des Innensacks aus dem Mantel im wesentlichen kein Gas durch die Entlüftungsöffnung austritt, so daß die Entlüftungsöffnung effektiv durch die aneinander anliegenden Gewebelagen verschlossen ist.

Vorteilhaft läßt sich der Innendruck, bei dem der Innensack aus dem Mantel austritt, durch die Wahl des Durchmessers bzw. der Querschnittsfläche der Durchtritts- bzw. Einströmöffnung, also der Einschnürung, vorbestimmen und an den jeweiligen Einsatzzweck des Gassacks anpassen.

Das Volumen des Innensacks kann deutlich geringer sein als das durch den Mantel begrenzte Volumen im aufgeblasenen Zustand des Gassack, da der Innensack hauptsächlich dazu dient, ab einem gewissen Innendruck des Gassacks die Entlüftungsöffnung freizugeben.

Mantel und Innensack können auf bekannte Weise in einem Stück gewebt sein. In diesem Fall kann der Arbeitsschritt, Innensack und Mantel zusammenzunähen, entfallen. Freilich ist es auch möglich, den Innensack z.B. aus zwei Gewebelagen, eine dabei mit der Einströmöffnung versehen, zusammenzunähen.

Bevorzugt ist die Entlüftungsöffnung bei ausgetretenem Innensack einer Außenseite des Mantels zugewandt, und bevorzugt ist in einem am Fahrzeug montierten Zustand der ausgetretene Innensack auf einer einem Insassen abgewandten Seite angeordnet, so daß vermieden wird, daß heißes Gas in Richtung des Insassen strömt.

Es ist natürlich auch möglich, einen Innensack mit mehreren Entlüftungsöffnungen zu versehen.

Weitere Merkmale und Vorteile der Erfindung ergeben sich aus der nachfolgenden Beschreibung eines Ausführungsbeispiels mit Bezug auf die beigefügten Zeichnungen. In diesen zeigen:
- Figur 1 einen schematischen Schnitt durch einen erfindungsgemäßen Gassack in einem nicht aufgeblasenen Zustand; und
- Figur 2 einen Schnitt durch den Gassack aus Figur 1 im vollständig aufgeblasenen Zustand.

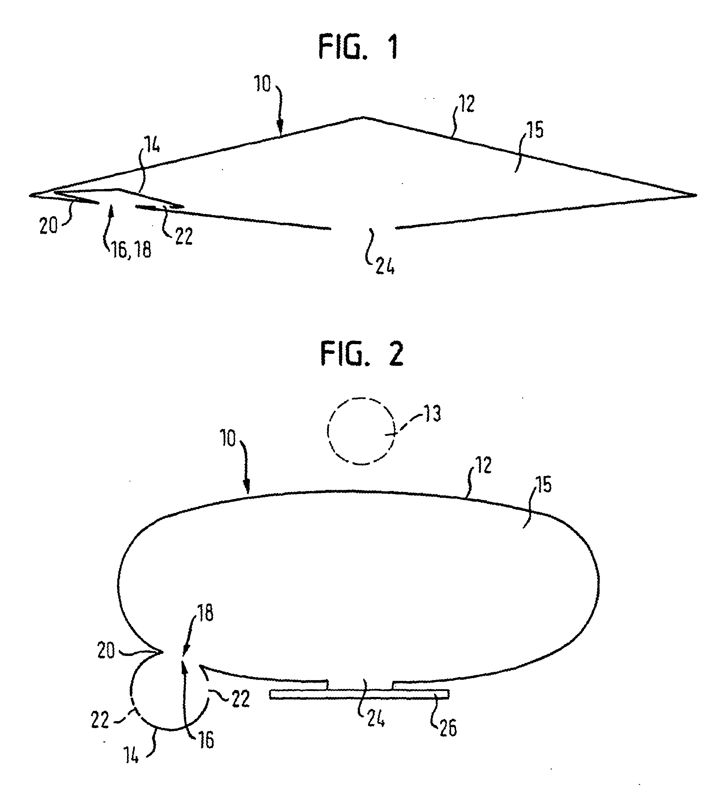

Figur 1 zeigt einen Gassack 10 mit einem aus einem Gewebe bestehenden Mantel 12, der eine Hauptkammer 15 des Gassacks 10 bildet und ein Schutzkissen darstellt, das zum Auffangen eines Fahrzeuginsassen 13 im Fall eines Unfalls gedacht ist.

Der Gassack 10 weist einen ebenfalls aus einem Gewebe bestehenden Innensack 14 auf, der mit einer Entlüftungsöffnung 22 versehen ist. Das Volumen des Innensacks 14 ist deutlich geringer als das der durch den Mantel 12 begrenzten Hauptkammer 15. Der Innensack 14 ist so mit dem Mantel 12 verbunden, daß eine Einströmöffnung 16 des Innensacks 14 mit einer im Mantel 12 angeordneten Durchtrittsöffnung 18 verbunden ist und eine Einschnürung 20 zwischen der Hauptkammer 15 und dem Innensack 14 gebildet wird. Anders ausgedrückt: der die Durchtrittsöffnung 18 begrenzende Rand des Mantels 12 ist mit dem die Einströmöffnung 16 begrenzenden Rand des Innensacks 14 bei der Einschnürung 20 verbunden, wie die Figuren zeigen.

Im zusammengelegten Zustand des Gassacks 10 ist der Innensack durch die Durchtrittsöffnung 18 in das Innere des Mantels 12 eingestülpt und gemeinsam mit diesem zusammengelegt.

Wenn der Gassack 10 über eine Einblasöffnung 24 mit Gas aus einer nicht gezeigten Druckgasquelle befüllt wird, wird der Innensack 14 durch die Durchtrittsöffnung 18 aus dem Mantel 12 herausgedrückt, sobald ein vorbestimmter Innendruck im Gassack 10 erreicht ist. Sobald der Innensack 14 aus dem Mantel 12 ausgetreten ist, kann Gas durch die Entlüftungsöffnung 22 ins Freie ausströmen.

Über die Größe, also z.B. die Querschnittsfläche, der Einschnürung 20 läßt sich der Widerstand exakt einstellen, den der Innensack 14 zum Austreten aus dem Mantel 12 überwinden muß. Hieraus ergibt sich der Innendruck, bei dem die Entlüftungsöffnung 22 freigegeben wird. Die genaue Größe der Durchtrittsöffnung 18 ist abhängig vom jeweiligen Einsatzzweck des Gassacks 10 und kann von einem Fachmann auf einfache Art und Weise ermittelt und festgelegt werden.

Die Entlüftungsöffnung 22 ist, wie Figur 1 zeigt, so angeordnet, nämlich nahe an der Einschnürung 20, daß aus dem Mantel 12 kein Gas ausströmen kann, solange der Innensack 14 nicht aus dem Mantel 12 ausgetreten ist. Die Entlüftungsöffnung 22 kommt bei teilweise aufgeblasenem Gassack im Bereich des Randes der Durchtrittsöffnung 18 zu liegen und bleibt geschlossen.

Außerdem ist die Entlüftungsöffnung 22 so angeordnet, daß sie im voll aufgeblasenen Zustand des Gassacks 10, wenn der Innensack aus dem Mantel 12 ausgetreten ist, zur Außenwandung des Mantels 12 gerichtet ist, wie die rechte Entlüftungsöffnung 22 in Figur 2 zeigt.

Der Gassack 10 ist bevorzugt so an einem Fahrzeugteil 26 angeordnet, daß der Innensack 14 und vor allem die Entlüftungsöffnung 22 von dem Insassen 13, der auf den Gassack 10 aufprallt, abgewandt sind.

Der Innensack 14 kann auch mehrere Entlüftungsöffnungen 22 aufweisen (gestrichelt in Figur 2).

## Patentansprüche

1. Gassack für ein Fahrzeuginsassen-Rückhaltesystem,
mit einem Mantel (12), der eine Durchtrittsöffnung (18) aufweist,
und einem Innensack (14) mit einer Einströmöffnung (16) und wenigstens einer Entlüftungsöffnung (22),
wobei der Rand der Einströmöffnung (16) des Innensacks (14) mit dem Rand der Durchtrittsöffnung (18) verbunden ist, und
wobei der Innensack (14) in einem zusammengelegten Zustand des Gassacks (10) in das Innere des Mantels (12) eingestülpt ist und während eines Aufblasens des Gassacks (10) durch die Durchtrittsöffnung (18) aus dem Mantel (12) austreten kann, **dadurch gekennzeichnet, dass**
der Gassack (10) im Bereich der Verbindung von Mantel (12) und Innensack (14) eine Einschnürung (20) für den Innensack (14) aufweist.

2. Gassack nach Anspruch 1, wobei die Entlüftungsöffnung (22) so angeordnet ist, daß während des Aufblasens vor dem Austreten des Innensacks (14) aus dem Mantel (12) kein Gas durch die Entlüftungsöffnung (22) austritt.

3. Gassack nach einem der vorhergehenden Ansprüche, bei dem das Volumen des Innensacks (14) deutlich geringer als das durch den Mantel (12) begrenzte Volumen im aufgeblasenen Zustand des Gassacks.

4. Gassack nach einem der vorhergehenden Ansprüche, bei dem Mantel (12) und Innensack (14) in einem Stück gewebt sind.

5. Gassack nach einem der vorhergehenden Ansprüche, bei dem die Entlüftungsöffnung (22) bei ausgetretenem Innensack (14) einer Außenseite des Mantels (12) zugewandt ist.

6. Gassack nach einem der vorhergehenden Ansprüche, bei dem in einem Fahrzeug montierten Zustand der ausgetretene Innensack (14) auf einer einem Insassen abgewandten Seite angeordnet ist.

7. Gassack nach einem der vorhergehenden Ansprüche, bei dem mehrere Entlüftungsöffnungen (22) vorgesehen sind.

## Claims

1. A gas bag for a vehicle occupant restraint system, comprising
a covering (12), which has a passage opening (18),
and an inner bag (14) having an inflow opening (16) and at least one ventilation opening (22),
the edge of the inflow opening (16) of the inner bag (14) being connected with the edge of the passage opening (18), and
the inner bag (14) being turned in into the interior of the covering (12) in a folded state of the gas bag (10) and being able to emerge from the covering (12) through the passage opening (18) during the inflation of the gas bag (10), **characterized in that** the gas bag (10) has a constriction (20) for the inner bag (14) in the region of the connection between the covering (12) and the inner bag (14).

2. The gas bag according to claim 1, in which the ventilation opening (22) is arranged such that during inflation, no gas exits through the ventilation opening (22) before the inner bag (14) emerges from the covering (12).

3. The gas bag according to any of the preceding claims, in which the volume of the inner bag (14) is distinctly smaller than the volume defined by the covering (12) in the inflated state of the gas bag.

4. The gas bag according to any of the preceding claims, in which the covering (12) and the inner bag (14) are woven in one piece.

5. The gas bag according to any of the preceding claims, in which, with the inner bag (14) having emerged, the ventilation opening (22) faces an outer surface of the covering (12).

6. The gas bag according to any of the preceding claims, in which in an installed state in a vehicle, the emerged gas bag (14) is arranged on a side facing away from an occupant.

7. The gas bag according to any of the preceding claims, in which several ventilation openings (22) are provided.

## Revendications

1. Coussin à gaz pour un système de retenue de passager de véhicule,
comportant une enveloppe (12) qui présente un orifice de passage (18),
et un coussin intérieur (14) avec un orifice d'admission (16) et au moins un orifice de désaérage (22),
le bord de l'orifice d'admission (16) du coussin intérieur (14) étant relié au bord de l'orifice de passage (18), et
le coussin intérieur (14) étant retourné vers l'intérieur de l'enveloppe (12) à l'état plié du coussin à gaz (10) et pouvant sortir hors de l'enveloppe (12) à travers l'orifice de passage (18) pendant un gonflage du coussin à gaz (10), **caractérisé en ce que** le coussin à gaz (10) présente dans la région de la liaison entre l'enveloppe (12) et du coussin intérieur (14) un étranglement (20) pour le coussin intérieur (14).

2. Coussin à gaz selon la revendication 1, dans lequel l'orifice de désaérage (22) est agencé de telle sorte que pendant le gonflage, du gaz ne sort pas à travers l'orifice de désaérage avant que le coussin intérieur (14) sorte hors de l'enveloppe (12).

3. Coussin à gaz selon l'une des revendications précédentes, dans lequel le volume du coussin intérieur (14) est nettement inférieur au volume limité par l'enveloppe (12) à l'état gonflé du coussin à gaz.

4. Coussin à gaz selon l'une des revendications précédentes, dans lequel l'enveloppe (12) et le coussin intérieur (14) sont tissés d'une seule pièce.

5. Coussin à gaz selon l'une des revendications précédentes, dans lequel l'orifice de désaérage (22) est tourné vers une face extérieure de l'enveloppe (12) lorsque le coussin intérieur (14) est sorti.

6. Coussin à gaz selon l'une des revendications précédentes, dans lequel, à l'état monté dans un véhicule, le coussin intérieur (14) sorti est agencé sur un côté détourné d'un passager.

7. Coussin à gaz selon l'une des revendications précédentes, dans lequel il est prévu plusieurs orifices de désaérage (22).
